# EUROPEAN PATENT SPECIFICATION

(11) **EP 3 288 901 B1**
(45) Date of publication and mention of the grant of the patent: **16.10.2024**
(21) Application number: 16789406.2
(22) Date of filing: 25.04.2016
(51) Int. Cl.: C02F 1/44, B01D 61/00, B01D 63/08

(54) **METHOD FOR THE REMOVAL OF FOULING PRECIPITATES FROM FORWARD OSMOSIS FILTRATION MEMBRANES**
VERFAHREN ZUR ENTFERNUNG VON FAULENDEN PRÄZIPITATIONEN AUS DIREKTOSMOSEFILTRATIONSMEMBRANEN
PROCÉDÉ POUR L'ÉLIMINATION DE PRÉCIPITÉS D'ENCRASSEMENT DE MEMBRANES DE FILTRATION D'OSMOSE DIRECTE

(30) Priority: 01.05.2015 US 201562156132 P
(43) Date of publication of application: 07.03.2018
(73) Proprietor: Dead Sea Works Ltd., 84100 Beer Sheva (IL)
(72) Inventor: YEHUDA-ZADA, Liat, 861800 Dimona (IL); AHARONI, Mordechay, 8533800 Lehavim (IL); GENKIN, Gregory, 33192 Haifa (IL); ABU-RABEAH, Khalil, 84106 Beersheba (IL)
(74) Representative: Maslanka Kubik, Dorota Irena
(86) International application number: PCT/IL2016/050436
(87) International publication number: WO 2016/178211

(56) References cited:
- WO-A1-2007/073207
- GB-A- 2 514 776
- US-A1- 2004 139 992
- US-A1- 2004 139 992
- US-A1- 2013 233 797
- US-A1- 2014 001 122
- US-A1- 2014 001 122

## Description

### Field of the Invention

The present invention relates to processes for the removal of scaling precipitants from membrane surfaces in general, and specifically from forward osmosis membranes.

### Background of the Invention

There are numerous industrial situations where dewatering of salt solutions is required, for example - concentrating solutions in salt or chemical production in order to precipitate desired minerals.

One example is Carnallite, a hydrated potassium magnesium chloride with formula: KMgCl₃ ·6(H₂O), being an important source of Potassium Chloride (also referred to herein as "KCl" or "Potash"), is an invaluable source for the production of synthetic fertilizers.

Carnallite may be extracted from natural brines, originating either from underground sources or from salty lakes. For example, US 2011/0123420A1 relates to a process for making Carnallite.

The natural brines may precipitate the Carnallite in evaporation ponds, wherein the Carnallite is then harvested and sent to industrial plants for processing.

In order to provide a higher yield of Carnallite, it would be beneficial to aspire to dewater the salt solutions in such evaporation ponds, and provide a more concentrated solution, or higher annual flow of concentrated solution. For example, dewatering using forward osmosis techniques.

One low-tech method of evaporation is solar evaporation, which consists of relatively low operational costs. However, this requires large land area, regulatory confirmations and has the potential to impact groundwater. In addition, the solar evaporated water is entrained into the atmosphere being actually lost and thus breaking the hydrological balance. For example, this issue may prove especially important in solar evaporation ponds such as the ones located at the Dead Sea.

Currently the primary technologies using to dewater salt solutions are reverse osmosis and evaporation. Both processes require relatively high consumption of external energy. Reverse osmosis (RO) is a low energy process which separates water from dissolved salts by pressurizing the solution and filtering salt from the permeate by use of a semipermeable membrane. RO has the limitation that the solutions being treated should not have suspended solids and must not precipitate during concentration. This often requires expensive chemical or filtration pretreatment. In addition, standard RO is only capable of concentrating solutions to about 7-8% TDS (Total Dissolved Solids).

Evaporation is another solution capable of taking salt solutions to dryness but possessing drawbacks, wherein single effect evaporation is very costly in terms of energy, and mechanical recompression evaporators are capital intensive due to the materials needed to resist corrosion. In addition, precipitation in evaporators complicates their design and such an operation incurs great expenses.

Forward osmosis (FO) is a membrane process which uses semipermeable membranes having a selectivity similar to RO membranes. In FO however, transport of water through the membrane is due to an osmotic pressure differential between two fluids rather than an applied mechanical pressure, i.e. water transfer occurs according to osmotic pressures difference and does not require energy consumption. The solution to be dewatered (feed solution) is contacted to one side of a membrane and a more concentrated brine (draw solution) having a higher osmotic pressure is contacted to the other. The process of osmosis causes water to move from the relatively diluted feed solution through the membrane into the higher osmotic strength draw solution. This process concentrates the feed solution and dilutes the draw one. For example, in that way, high salinity brine (DS) pumped from the Dead Sea may be concentrated using the FO technology just before entering the solar evaporation ponds. The end brine (EB), which is a highly concentrated brine exits the last evaporation pond, can be used as the draw solution.

In many industrial applications the draw solution can be recovered after dilution using a thermal evaporation, solar evaporation, RO or a combination of RO and nanofiltration (NF) (Herron et al. 2014). In other situations a high strength process brine is available to use as a draw solution.

WO2007073207 A1, GB2514776A disclose forward osmosis processes and relate to their fouling.

### Summary of the Invention

According to the present invention, there is provided a method for dewatering a solution, in which precipitation is occurring, by an FO technique and defined in the claims.

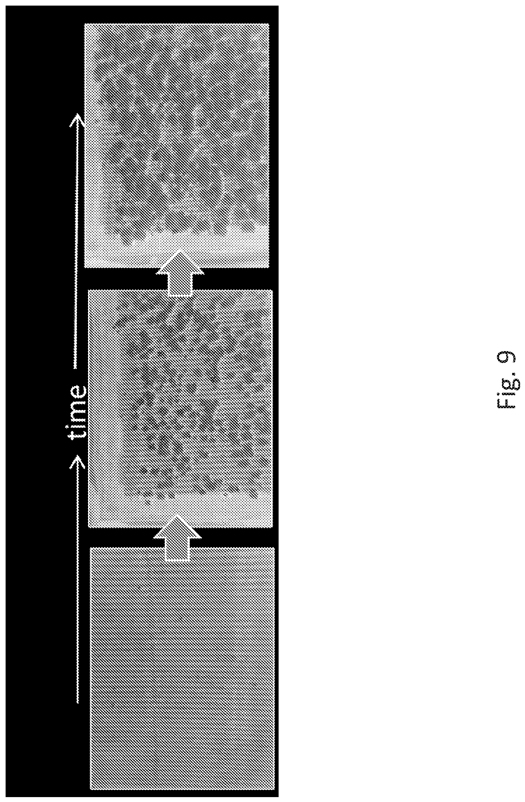

The precipitation blocks the membrane and reducing its performance, resulting - in part - in a flux loss (See Fig. 9 for example).

According to some demonstrative embodiments, the system, device and method described herein may be applied to equipment and procedures of FO concentration of solutions in which crystallization occurs. In some demonstrative embodiments, such crystallization may typically cause fast and/or complete blocking of membrane systems and in some cases result in an irreversible mechanical damage of the membrane.

According to some demonstrative embodiments, there is provided a method for removing scaling precipitants from membrane surfaces, for example, FO membranes.

According to some embodiments, the method may be used to remove precipitants from membrane surfaces, and as a result, recover mass transfer that can be lost due to the membrane blocking by such precipitants and/or foulants.

According to some demonstrative embodiments, the method may include a combination of temporarily stopping the filtration driving force optionally followed by flexing the membrane with a change in transmembrane pressure that may result in the precipitants losing adherence to the membrane surface, e.g., when the adherence is caused by mainly mechanical factors rather than chemical (like organic) ones.

According to some demonstrative embodiments, the scaling precipitants achieved due to the feed solution concentrating might be by-product (such as sodium chloride being precipitated before the Carnalite starts, in our case) , or they might be the desired product (such as Carnallite), while the embodiments actually describe an application to crystallizer.

According to some demonstrative embodiments, there is provided a device for automatically controlling the recovery of a membrane performance, e.g., an FO membrane. According to some embodiments, the device may include at least one component adapted to control the flow of solution(s) through the membrane.

According to some embodiments, the at least one component adapted to control the flow of solution(s) through the membrane may stop the water mass transfer due to driving force reduction. This reduction could be reached, for example, by stopping the flow of one of the solutions, a process which is referred to herein as "osmotic relaxation". The transmembrane pressure is varied by the predetermined number of pulses applied within the predetermined range of values during the predetermined time interval provided in the predetermined frequency of the osmotic relaxation , in order to enable and/or cause any precipitants to lose adherence to the membrane surface.

According to some demonstrative embodiments, there is provided a system for dewatering of solutions in which precipitation is occurring, wherein the system includes at least one membrane and at least one solution pumping mechanism, wherein the at least one membrane is adapted to be exposed to a surrounding solution, e.g., by being partially or completely submerged in a vessel, e.g., a solar evaporation pond.

There is provided a system for dewatering a solution including i. at least one membrane, such as FO membrane, adapted to be at least partially surrounded by a feed solution and to receive a flow through of a draw solution; and ii. a device adapted to control the flow of said draw solution through said at least one membrane; wherein said system may be configured to operate in at least three predetermined different modes of operation including; filtration mode, osmotic relaxation mode and pulsation mode.

According to some demonstrative embodiments, at least three different modes of operation, may be dynamic, i.e., not predetermined, e.g., wherein at least one element of the system may constantly or intermittently monitor the rate of precipitation on the surface of the membrane and wherein the osmotic relaxation and/or pulsation occurs in accordance with the precipitation intensity, for example, when the precipitation reaches a certain degree. Monitoring the rate of precipitation might use flux measurements, an on-line camera of the membrane surface, etc According to some demonstrative embodiments, the at least one FO membrane may include a membrane configuration.

The membrane configuration is adapted to be exposed to surrounding solution by partially or completely submerging in a solar evaporation pond, for example. According to some demonstrative embodiments, the at least three predetermined different modes of operation may include 55 minutes of operation in filtration mode; 4 minute operation in osmotic relaxation mode; and 1 minute of operation in pulsation mode.

According to some embodiments, the pulsation mode may include applying 2-10 pulses, wherein the amplitude (vacuum) of each pulse may be in the range of 0.2-0.9 bar.

In some demonstrative embodiments of the present invention there is provided a device for controlling the flow of a draw solution through at least one membrane, such as FO membrane, which may include at least one controller, at least one timer and at least one sensor analyzer According to some embodiments, controlling the flow of a draw solution through at least one membrane, such as FO membrane may include commencing or stopping an action of suction and/or pumping of said draw solution.

According to some demonstrative embodiments, the controller may be configured to determine one or more parameters, including number of pulses, frequency, amplitude and the like according to precipitation intensity,.

According to some embodiments, the timer may be configured to indicate the specific predetermined time intervals in which said controller is to commence or stop the action of suction and/or pumping.

According to some demonstrative embodiments, the sensor analyzer may be configured to measure the pulsing amplitude.

According to some other embodiments, the sensor analyzer may indicate the precipitation intensity on the surface of the FO membrane. According to these embodiments, the operation of the controller of the device may depend upon the readings of the sensor analyzer, for example, when there is a high intensity of precipitation this will result in a reduction of the flux. According to some other embodiments, the sensor analyzer may be connected to an on-line camera showing extensive membrane area blockage, wherein the controller may stop the flow of the draw solution into the membrane in accordance with the degree of blockage, for example, when there is a high intensity of precipitation this will result in a reduction or stop of the flux.

In some demonstrative embodiments of the present invention there is provided a method for dewatering a solution including processing a draw solution through at least one membrane, for example FO membrane, in at least three predetermined different modes of operation including; filtration mode, osmotic relaxation mode and pulsation mode, wherein said FO membrane is adapted to be at least partially surrounded by a feed solution.

According to some demonstrative embodiments, the osmotic relaxation mode may include a period of stop of flow of said draw solution between 1 minute and one hour.

The stop of flow period may be determined according to the precipitation intensity. As mentioned, precipitation intensity might be calculated as, for example, by mounting camera showing on-line blocking of the membrane surface, or by flux reduction to a certain grade, etc.

According to some demonstrative embodiments, the pulsation mode may include applying a transmembrane pressure (feed pressure minus draw pressure) from negative to zero for a period of 1 second to one minute, according to the precipitation intensity.

The transmembrane pressure is be varied by the predetermined number of pulses, applied with a predetermined amplitude within the predetermined range of values, provided in the predetermined frequency during the predetermined time interval. The number of pulses, the range of values, the frequency and the time interval are functions of the precipitation intensity. These functions are operated by the special controller.

According to some demonstrative embodiments, the membrane elements may be equipped with substantially open feed channels enabling the crystals be removed from the membrane and carried away for the further separation from the feed fluid.

According to some demonstrative embodiments, the membrane configuration, such as plate, arrangement described in herein may include a gap between plates which is between 0.5cm and 2cm.

According to some demonstrative embodiments, the membrane configuration, such as plate, arrangement described herein includes the membrane surfaces contacting the feed solution which are substantially smooth on the sub-micron scale. Preferably these membranes are cellulose ester or thin film composite membranes with a sub-micron scale smooth coating.

According to some demonstrative embodiments, one of the main advantages of the method described herein is the ability to remove scaling precipitants from the surface of a membrane, while essentially preserving the integrity of the membrane, i.e., with little or no damage to the membrane itself.

### Brief Description of the Drawings

The present invention will become fully understood from the detailed description given herein below and the accompanying drawings, which are given by way of illustration and example only, and thus not limiting in any way, wherein:
- Fig. 1is: a schematic illustration of a system for dewatering of solutions in which precipitation is occurring, according to some embodiments of the present invention;
- Fig. 2: is a schematic illustration of a device for pumping solution into an FO membrane, according to some embodiments of the present invention;
- Figs. 3A- 3C: are images of an exemplary membrane in various modes of operation in accordance with some demonstrative embodiments described herein.
- Figs. 4a and 4b: are illustrations of an exemplary line according to a preliminary full scale gravity head driven plant design in accordance with some demonstrative embodiments described herein.
- Fig. 5: demonstrates an End Brine (draw solution) mass change as a function of time applying mass transfer recovery due to osmotic relaxation followed by pulsation, according to some embodiments of the present invention
- Fig. 6: demonstrates water flux as a function of time, applying osmotic relaxation every ~1 h, according to some embodiments of the present invention
- Figs. 7A and 7B: show CFD (Computational Fluid Dynamics) simulation results of NaCl particles "leaving" the membrane surface according to the present invention. Figs. 7A and 7B are schematic isometric and front view illustrations of single Commercial Sized Plate Test System Design and Engineering, according to some demonstrative embodiments.
- Fig. 8: demonstrates water flux as a function of time, applying osmotic relaxation every ~1 h, of various membranes (such as embedded and non-embedded support Cellulose triacetate (CTA), and embedded support thin film composite (TFC)), according to some embodiments of the present invention.
- Fig. 9: illustrates a series of images showing scaling during FO operation, in accordance with some demonstrative embodiments described herein.

### Detailed Description of the Invention

There is provided a system, device and method that could be applied to concentrating solution due to dewatering, in which precipitation is occurring, in part - to FO technique.

According to some demonstrative embodiments, the system, device and method described herein may be applied to equipment and procedures of concentration of solutions through membranes, such as FO membrane, in which precipitation occurs. According to some embodiments, the procedures for concentration of solutions, for example, procedures using FO concentration, described herein may include a multi stage concentration of brines, e.g., brines precipitating first NaCl, and at the next stage - precipitate Carnallite.

In some demonstrative embodiments, the mentioned crystallization may typically cause quick and/or complete blocking membrane surfaces, resulting in mass transfer reduction and in some cases causing an irreversible mechanical damage of the membrane.

According to some demonstrative embodiments, there is provided a method for removing scaling precipitants from membrane surfaces, in part - FO membranes.

According to some embodiments, the method may be used to effectively remove precipitants from membrane surfaces, and as a result, recover filtration performance that could be lost due to the occurrence of such precipitants and/or foulants.

According to some demonstrative embodiments, the method may include a combination of temporarily stopping the filtration driving forces optionally followed by flexing the membrane with a change of transmembrane pressure that may result in the reduction of precipitants adherence to the membrane surface, in the case when the adherence is caused by mainly mechanical factors.

According to some demonstrative embodiments, the precipitation may be a by-product inducing membrane scaling, or it may be a desired product while the invention describes an application to crystallizer.

According to some demonstrative embodiments, there is provided a device for automatically controlling the recovery of a membrane performance, for example FO membrane. According to some embodiments, the device may include at least one component adapted to control the flow of solution(s) through the membrane.

According to some embodiments, at least one component adapted to control the flow of solution(s) through the membrane, such as FO membrane may stop and commence the flow of the solution predetermined time intervals, to enable and/or cause any precipitants to lose adherence to the membrane surface.

According to some demonstrative embodiments, there is provided a system for dewatering of solutions in which precipitation is occurring, wherein the system includes at least one membrane and at least one solution pumping mechanism, wherein at least one membrane is adapted to be surrounded by a liquid solution, e.g., to be partially or completely submerged in a vessel or in a solar evaporation pond.

According to some demonstrative embodiments, there is provided a method for dewatering precipitating solutions by membrane technique, such as forward osmosis, in which precipitants may be released from the membrane configuration, such as plate, surface by periodically stopping flow of draw solution for a short period, then fluctuating the pressure of the draw, causing crystals to release from the membrane.

As mentioned, the transmembrane pressure is varied by the predetermined number of pulses within the predetermined range of values during the predetermined time interval provided accordingly to the predetermined frequency of the osmotic relaxation.

According to some demonstrative embodiments, an electromagnetic valve may be implemented in the system, device and/or method described herein and may enable up to 10 Hz pulsing frequency, i.e. up to 10 pulses per second. This may multiply proportionally the number of possible pulses, an application of electromagnetic valves jointly with an appropriate controller may considerably expand the ranges and improve the operational flexibility of the invention.

For instance, according to some demonstrative embodiments the duration of no draw flow to the membrane element is between 1 minute and one hour, The transmembrane pressure (feed pressure minus draw pressure) is relaxed from negative to zero for a period of 1 second to one minute, and may be cycled from negative to zero between 2 and 10 times. The osmotic relaxation frequency may vary between one per 30 min. of filtration mode to one per several hours of filtration mode.

According to some demonstrative embodiments the membrane elements may include a membrane configuration, such as plate, arrangement including parallel membrane configuration, such as flat plates, with substantially open feed channels so that crystals released from the membrane are not lodged in the system but are carried away for the further separation from the feed fluid.

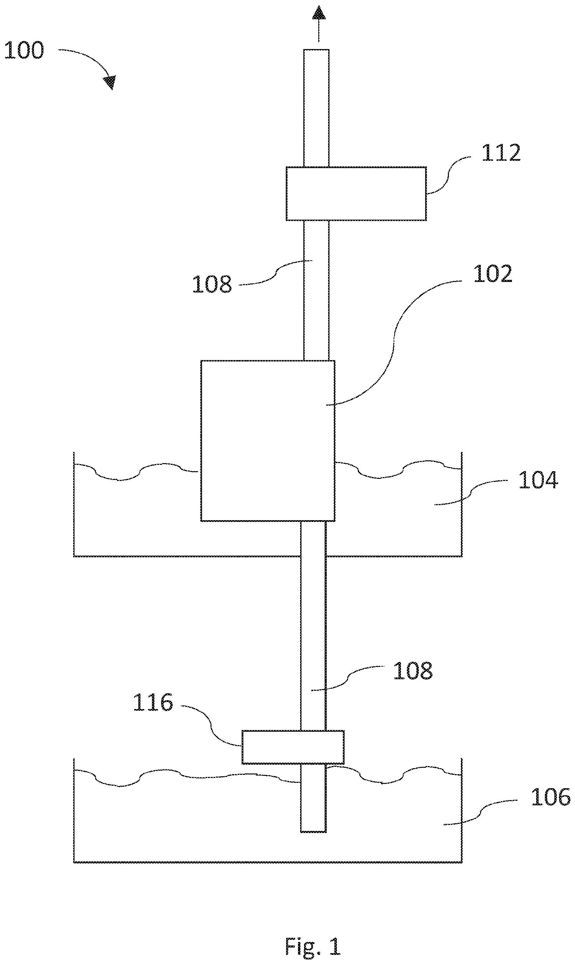

According to some demonstrative embodiments, instead of a standard spiral or tubular configuration, the system of the present invention may use flat sheet membrane in a configuration which has a substantially open feed channel, as shown in Fig. 1.

According to some demonstrative embodiments the plate arrangement may include a gap between the plates between 0.5cm and 2cm.

According to some embodiments, the solution to be dewatered (feed solution) flow across the membrane surface of the plates while a high osmotic strength draw solution flows in a gap between the membranes and the plate structural piece. The draw solution may be kept at a pressure lower than that of th feed solution and there is a fine support structure in the gap between the membrane and the plate to maintain the gap dimensions.

In some demonstrative embodiments, the method of the present invention may include a process in which during membrane dewatering the concentration polarization effect may cause the highest concentrations of dissolved species in the feed to be at the membrane surface, e.g., if the solution is saturated in any salt, there might be an inherent tendency for precipitants to grow on the membrane surface. In addition, the scaling precipitants, such as crystals, adhere to the membrane surface due to the hydrodynamic force caused by water transfer flow. Initially the effect of membrane blocking is relatively minor, but the further growing of the scaling precipitants (e.g. crystals) due to the filtration eventually might result in crystals accumulating into agglomerates, completely blocking water transport.

In some demonstrative embodiments, the invention includes periodic release of crystals from the membrane surface being swept away for the further removal, as explained in details herein.

According to some demonstrative embodiments, the method may consist of halting the flow of draw solution to the membrane. In regions where salt crystals are blocking the membrane, even a minor back pulse may cause membrane flexing and thus cause the release of crystals from the surface. Typically some crystals, or their agglomerates, may remain attached to the membrane due to viscous effects, however if the negative pressure on the draw solution is turned on and off, once or several times at the predetermined amplitude and frequencies described above, the membrane flexes slightly and finally the crystals fall off. In addition, as visually observed, the agglomerates are finally falling also due to gravitational force.

According to some embodiments, the process of water removal leading to a crystal growth followed by a short period of osmotic relaxation and pulsation leading to crystal removal may be repeated on a regular schedule. The further removal of crystals from the solution can be performed by gravity settling or coarse micro- or ultra-filtration, etc. Reference is now made to Fig. 1 depicting a schematic illustration of a system 100 for dewatering of solutions in which precipitation is occurring, according to some embodiments of the present invention.

System 100 includes a membrane 102, for example FO membrane, at least partially surrounded by a liquid solution, e.g., partially or completely submerged in a feed Solution 104 (Also referred to herein as "DS").

As shown in Fig. 1, System 100 also includes at least one passage tubes 108 and pumping device 112, adapted to pump from draw solution 106.

According to some demonstrative embodiments, upon activation of system 100, pumping device 112 may cause the transfer of draw solution 106 through FO membrane 102 via at least one passage tubes 108, e.g., using suction and/or pumping mechanisms.

According to some demonstrative embodiments, passage of draw solution 106 through FO membrane 102 leads to a process of filtration, such as forward osmosis causing water from DS 104 to pass through FO membrane 102 via passage tubes 108. This dilutes draw solution exits the membrane via passage tubes 108 .

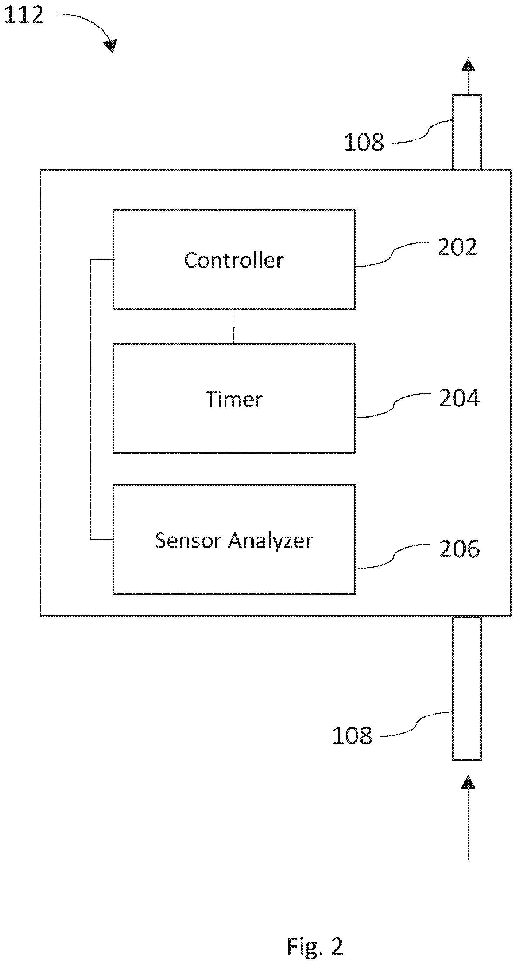

Upon the activation of system 100 for a sustained period of time, undesired precipitants may precipitate on the surface of FO membrane 102, causing a reduced performance of system 100 due to the diminished passage of water from DS 104 into passage tubes 108 through the membrane. According to some demonstrative embodiments, and as explained in detail below with regard to Fig. 2, system 100 may include pumping device 112 which may cause the transfer of draw solution 106 through FO membrane 102 via at least one passage tubes 108, e.g., using suction and/or pumping mechanisms.

In some demonstrative embodiments, pumping device 112 may be adapted to stop the action of suction and/or pumping of draw solution 106 in order to enable the removal of scaling precipitants from the membrane surface 102.

According to some demonstrative preferred embodiments of the present invention, stopping the draw solution flow, and applying at least one, and preferably few pulses using the pump (creating vacuum in our case) may facilitate the removal of scaling precipitants from the FO membrane. According to some embodiments, system 100 may include a flow stopper 116 adapted to initiate or stop the flow of draw solution 106 to membrane plate 102 or alternatively, to a membrane configuration.

According to some demonstrative embodiments, the term "membrane configuration" as referred to herein may include at least one plate including two or more FO membranes on the sides of the plate, e.g., a single membrane on each side of the plate, adapted, for example, to enable a better osmosis process and/or provide higher yield..

According to some embodiments, system 100 may include an "enhanced stop flow mechanism", wherein flow stopper 116 may stop the flow of draw solution 106 and pumping device 112 keeps on the action of suction and/or pumping, thereby creating a "vacuum like" effect which may improve the removal of scaling precipitants from the surface of membrane 102, e.g., due to the further pulsation and membrane flexing.

Reference is now made to Fig. 2, which schematically illustrates a device 112 (Fig. 1) for pumping draw solution into a membrane, e.g., an FO membrane, according to some embodiments of the present invention.

As shown in Fig. 2, device 112 is connected to passage tubes 108, before or after the position of a membrane (not shown in this Fig.) and may be adapted to commence or stop an action of suction and/or pumping of a solution into the membrane or to a membrane configuration.

As shown in Fig. 2, device 112 may include at least one controller 202, at least one timer 204 and optionally at least one sensor analyzer 206, measuring the pulsing amplitude (for instance vacuum).

According to some demonstrative embodiments, controller 202 may control the commence or stop an action of suction and/or pumping, e.g., by electrically turning a pump (not shown in the Fig.) on or off, respectively. According to some embodiments, the controller 202 may be used to determine one or more parameters, including number of pulses, frequency, amplitude and the like **according to** precipitation intensity.

For example after 55 minutes of filtration (operational), controller 202 may stop the flow of draw solution there by initiating a 4 minute osmotic relaxation, followed by a 1 minute pulsation while applying 2-10 pulses, wherein the amplitude (vacuum) might be 0.2-0.9 bar, preferably, 0.2-0.5 bar, more preferably 0.2-0.3 bar.

The controller may be connected to a timer 204, wherein timer 204 may indicate the specific predetermined time intervals in which the controller is to commence or stop the action of suction and/or pumping.

According to some demonstrative embodiments, timer 204 may include any specialized type of clock for measuring time intervals, including for example, Mechanical timers, Electromechanical timers, Electronic timers, Software applications, etc.

According to some demonstrative embodiments, timer 204 may be set to the predetermined time intervals in order to facilitate the removal of scaling precipitants from the membrane surface (Not shown in Fig. 2).

According to some demonstrative embodiments, the intervals may range between 30 minutes working time of device 112 (due to filtration) and 1 minute stop work (also referred to herein as "Osmotic Relaxation") of device 112, to 6,000 minutes working time of device 112 and 60 minutes osmotic relaxation of device 112 every cycle. Preferably, the intervals include 55 minutes of work of device 112 and 5 minutes of stop work of device 112 every hour.

In accordance with some demonstrative embodiments, the operation of device 112 may be combined with the operation of flow stopper 116 (not shown in fig. 1), wherein flow stopper 116 may stop the flow of draw solution 106 and device 112 keeps on working and creating suction, thereby creating a vacuum effect and thus in the pulsation stage - enhancing the removal of scaling precipitants from the membrane surface 102 (Not shown in Fig. 2).

Additional preferable time intervals may include

| Operational stage duration (min) | Osmotic relaxation stage (min) | Pulsation stage duration (min) | Pulse amplitude (bar) | Number of pulses |
|---|---|---|---|---|
| 120 | 10 | 1 | 0.2-0.3 | 1 |
| 55 | 4 | 1. | 0.2-0.3 | 1 |
| 55-6,000 | 1-60 | 1-60 | 0.1-0.9 | 1-50 |
| 210 | 5 | 15 | Not Known | Not Known |
| 210 | 5 | 60 | Not Known | Not Known |
| 55 | 5 | | 0.6-0.7 | 5-6 |
| 55 | 5 | | 0.9 | 5-6 |
| 120 | 20 | | 0.6-0.7 | 5-6 |
| 120 | 10 | | 0.6-0.7 | 5-6 |
| 120 | 5 | | 0.6-0.7 | 5-6 |
| 90 | 5 | | 0.6-0.7 | 5-6 |

In some embodiments, device 112 may include and/or be controlled by a PC, a desktop computer, a mobile computer, a laptop computer, a notebook computer, a tablet computer, a server computer, a handheld computer, a handheld device, a PDA device, a handheld PDA device, an on-board device, an off-board device, a hybrid device, a mobile or portable device, a non-mobile or non-portable device, a wireless communication device, a cellular telephone, a Personal Communication Systems (PCS) device, a PDA device which incorporates a wireless communication device, a wired or wireless handheld device (Samsung, iPhone, BlackBerry, Palm Treo, etc.), a Wireless Application Protocol (WAP) device, or other similar devices.

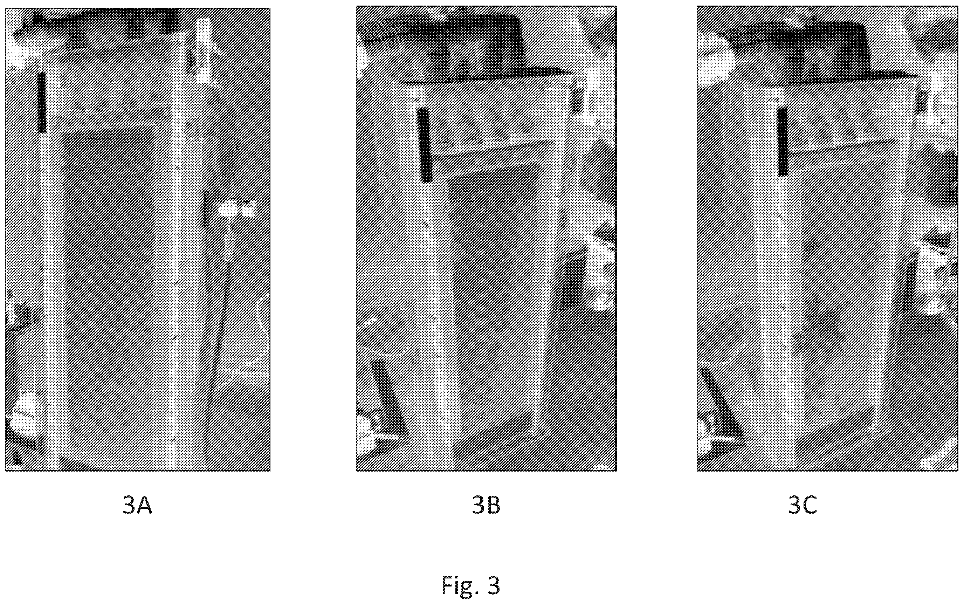

Reference is now made to Figs. 3A-3C which are images of an exemplary membrane in various modes of operation in accordance with some demonstrative embodiments described herein.

As explained hereinabove, the system, device and method described herein enable an operation in at least three different modes of operation including; filtration mode, osmotic relaxation mode and pulsation mode, for example a 3.5 h filtration, e.g., a Forward Osmosis process (the results of which are shown in Fig. 3A), followed by Osmotic Relaxation and pulsation, e.g., to enable the loss of adherence to the membrane surface by the undesired precipitants. Fig. 3B shows the results of osmotic relaxation and pulsation performed for a duration of 15 minutes. Fig. 3C shows the results of osmotic relaxation and pulsation performed for a duration of 60 minutes.

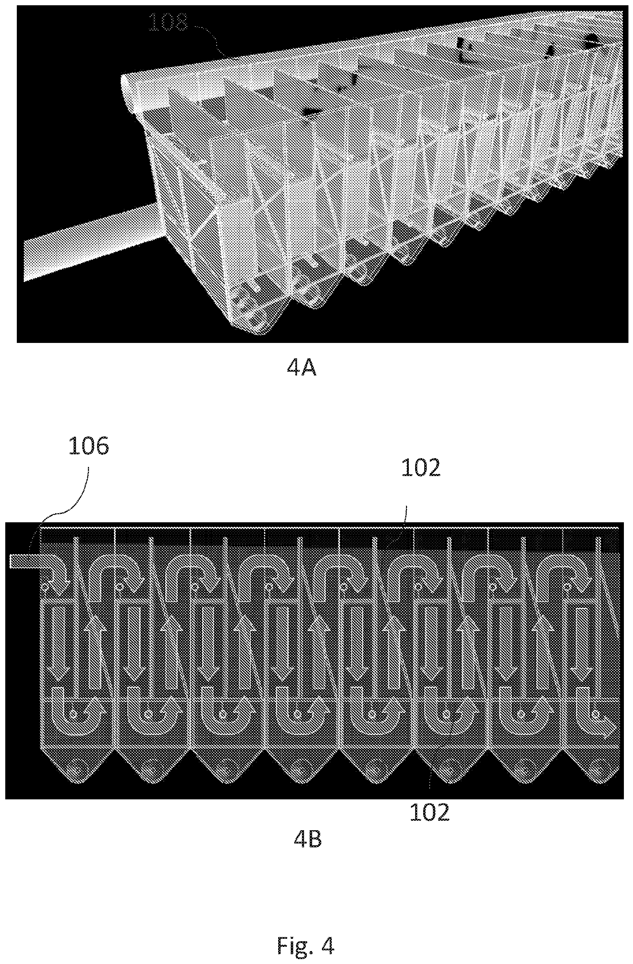

Figs. 4a and 4b are illustrations of an exemplary line according to a preliminary full scale gravity head driven plant design in accordance with some demonstrative embodiments described herein.

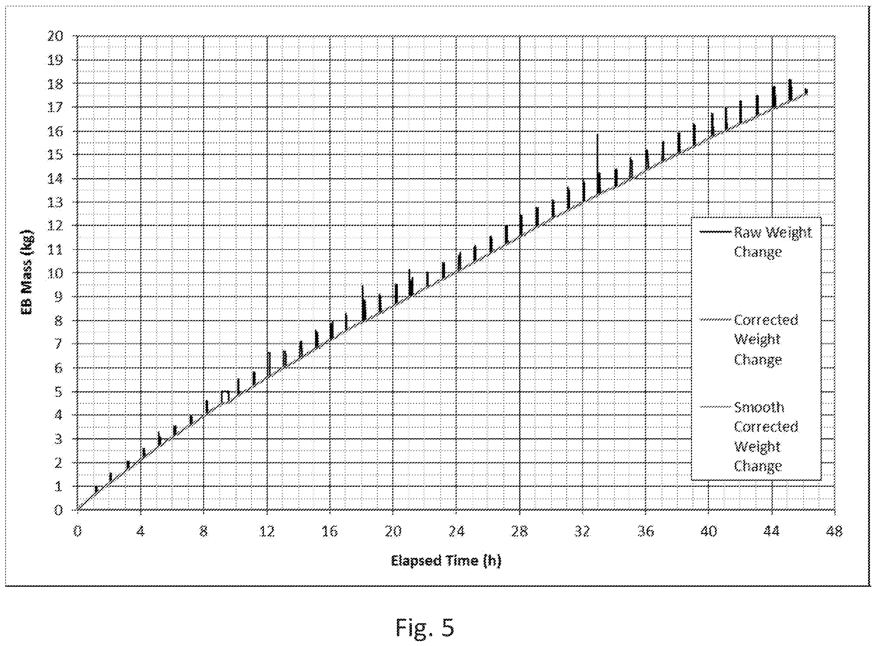

Fig. 5 demonstrates an End Brine (draw solution) mass change as a function of time applying mass transfer recovery due to osmotic relaxation, according to some embodiments of the present invention

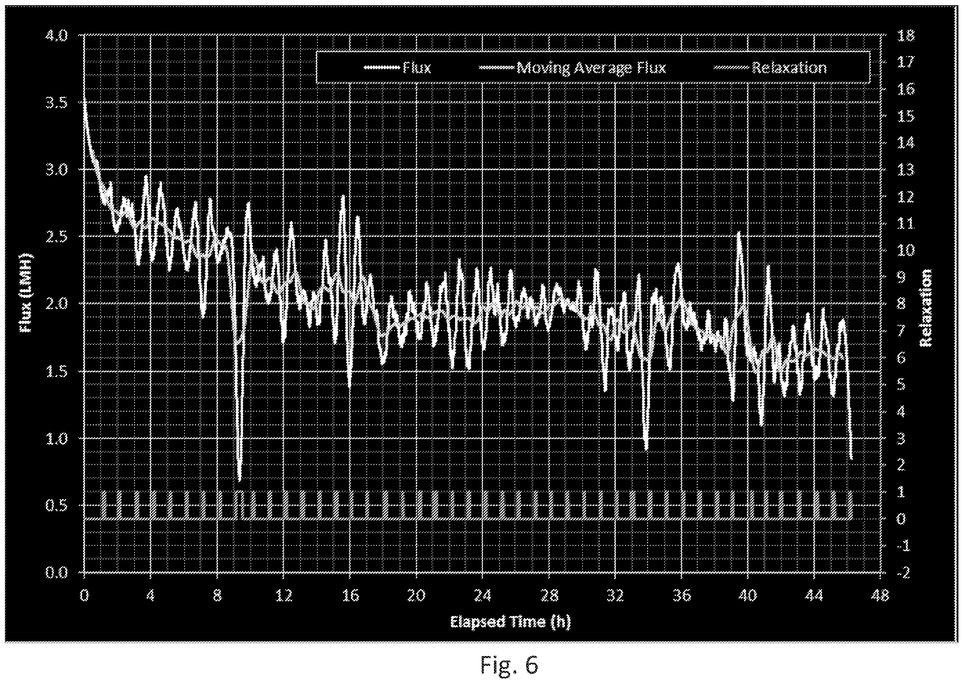

Fig. 6 demonstrates water flux as a function of time and osmotic relaxation according to some embodiments of the present invention and shows the gross flux evolution through ~46 operational h. The average flux evaluated at the end of the test was 2.02 LMH. Driving force reduction during the FO process (due to feed solution concentration and draw solution dilution, results in a final averaged flux much lower compared with the initial one. This causes a basic loss of performance. The target of the current invention is to prevent an extra performance loss occurred due to membrane blocking. Past comparative test demonstrated the final flux be much higher in the case of the described invention application.

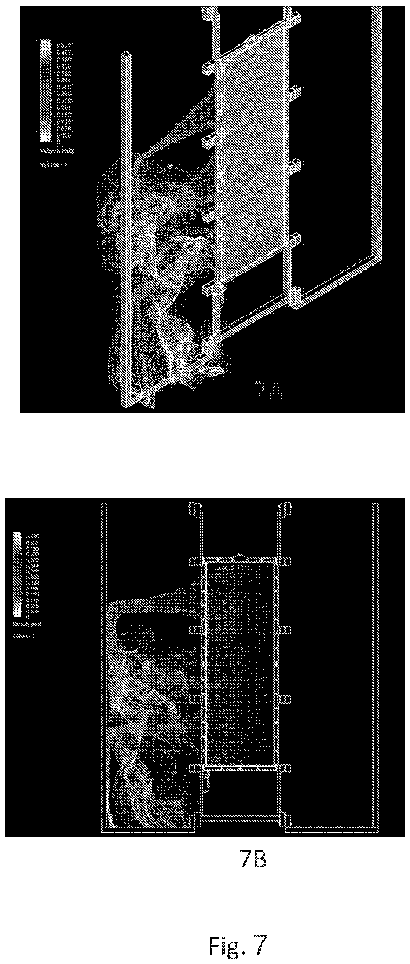

According to some demonstrative embodiments, Figs. 7A and 7B demonstrate schematic isometric and front view illustrations of an exemplary model including a single commercial sized plate test system crossflow CFD simulation: 0.5mm NaCl particle trajectories colored by velocity. According to some embodiments, the model predicts 84% of solids leaving membrane surface accumulate at bottom of left tank while 16% exit the 8in pipe and are recirculated.

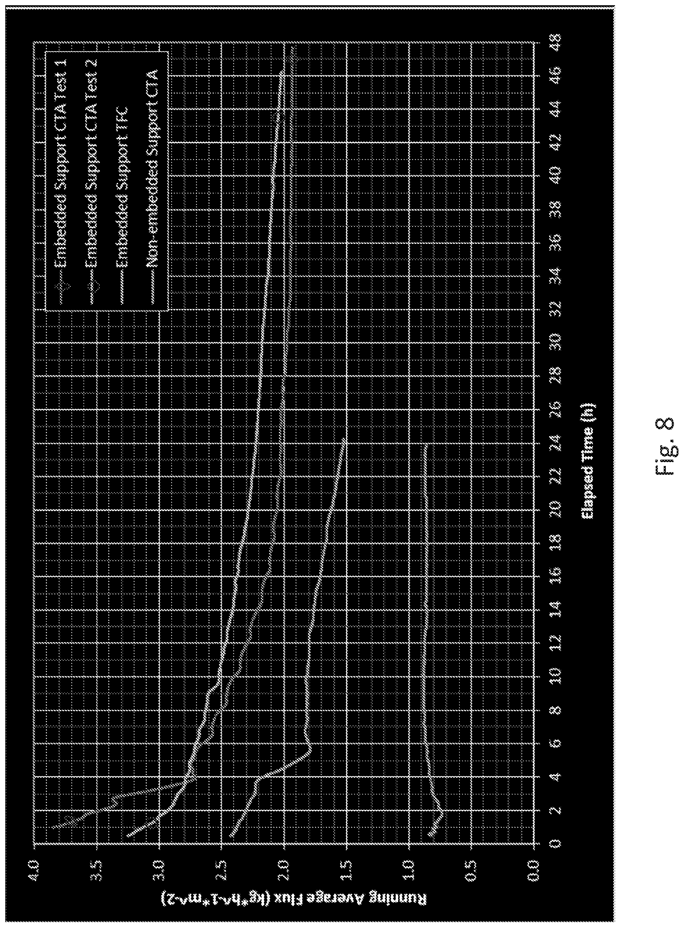

Reference is now made to Fig. 8 which demonstrates water flux as a function of time, applying osmotic relaxation every ~1 h, of various membranes (such as embedded and non-embedded support Cellulose triacetate (CTA), and embedded support thin film composite (TFC)), according to some embodiments of the present invention.

Applying the present invention on embedded support CTA membrane showed final fluxes of 2.02 LMH and 1.94 LMH during ~46 h and 48 h of operation, respectively. Using embedded support TFC and not-embedded support CTA membranes in the same test conditions during ~24 h resulted in relatively low final flux of 1.53 LMH and 0.86 LMH.

Reference is now made to Fig. 9 which illustrates a series of images showing scaling during FO operation, in accordance with some demonstrative embodiments described herein.

Fig. 9 demonstrates that within two hours of operation, scaling precipitants (salts) can be seen accumulating on the surface of the membrane.

### Example 1

An experiment has been conducted in the dewatering of saturated salt solutions from the Dead Sea of ~28% TDS targeting salt harvesting. Currently the Dead Sea is a source of a significant part of the world's agricultural potassium. Water is pumped from the Dead Sea to a cascade of large evaporation ponds where different salts crystallize in series. Sodium chloride immediately starts a precipitation with water evaporation due to the Dead Sea being at NaCl saturation point. The salt carnallite (KCl·MgCl₂·6H₂O) is of a particular value because comprises the final product KCl.Most of NaCl containing in the brine should be crystalized prior to the carnallite precipitation. After the carnallite precipitates, a highly salinized brine (EB - End Brine) remains, comprising mainly CaCl₂ and MgCl₂ of ~35 wt.% TDS. This brine is depleted back to the Dead Sea.

The production rate of Carnallite should be enhanced, however, unfortunately no extra evaporation area is available.. In addition the removed water should be recycled back to the Dead Sea in order to keep the hydrological balance preventing the negative impact on the Dead Sea level. Therefore the forward osmosis application dewatering the Dead Sea brine (DS) has been studied. The draw solution is the EB, the highly concentrated brine containing mainly CaCl₂ MgCl₂. The EB flows from the final evaporation pond. The EB should draw water from the feed (DS) pumping to the first evaporation pond. The removed water should dilute the draw solution before it returns back to the sea. Water removal should cause NaCl precipitation from the feed.

'∼50 hour' test with DS as the feed solution and with EB as the draw solution yielded a final averaged flux of ~ 1.94 LMH, which provides a principle feasibility of the presented invention

During the osmotic relaxation process in the '~50 hour' test, the feed solution (DS) recirculation continues at normal. A vacuum is pulled on the draw side of the membrane with the EB recirculation pump by closing the inlet valve towards the plate. Once 0.6 bar vacuum is achieved, the EB pump is stopped and the plate is completely isolated by finally closing the outlet valve. The vacuum is held for the desired relaxation time. Once the predetermined relaxation time interval is completed both valves are opened and the EB flow restarted. The majority of crystals are immediately swept away by the DS crossflow. The few residual remaining crystals that are still adhered to the membrane are encouraged to leave the surface by pulsing a vacuum several times using the inlet valve. This process is relatively robust and reliable however is non-optimized yet.

### Example 2

Following completion of the first -'50 hour' test, the membrane plate was drained and removed from the tank, and placed into a sealed bag prior to further testing.

Preparation of brines: The used EB and DS brines were recovered for reuse. The End Brine was heated to 55°C and aerated for 3 days in order to evaporate the 17.5 L of water that was drawn during the past test. The Dead Sea water was heated to 55°C and had 17.5 L of water added to it. Continuous mixing was used to completely dissolve all the solids that had precipitated during the previous test.

### TESTING CONDITIONS:

Time = 46.2 hr
Temperature = 34.4 to 36.7 °C
Membrane Area = 0.188 m2
Plate Gap = 10 mm
DS CFV = 41.6 cm/s
EB CFV = 2.46 cm/s
Osmotic Relaxation:
   Time = 5 min per 60 min
   Vacuum = 0.65 bar

It was found that an osmotic relaxation duration of 5 min/hr combined with a predetermined pulsation was sufficient to evacuate all solids.;

### RESULTS:

The test was run over 46 hours of operation using a continuous procedure of 55min FO operation followed by a 5min osmotic relaxation.

This resulted in an average water flux of 2.02 LMH; compared to the initial result of 1.94 LMH over 48 hr. This demonstrates a good repeatability of results and thus a reliability of the proposed invention.
- DS Vol. = 520 --> 502.45 L (3.38% concentration)
- EB Vol. = 138 --> 155.55 L (12.72% dilution)

### Example 3

An exemplary single 0.5m × 1.5m × 25mm thick double sided plate having a total of 1.5m2 membrane area was subjected to an end brine (EB) flow, as the draw solution, inside the plate.

A test duration of 65 hours was conducted.

The EB is continuously circulated (except during osmotic relaxation) through the membrane. An EB tank on a balance is used to measure the rate of water transfer. Every ~5 hours, the diluted EB is drained from this tank and is replaced with fresh EB due to the reduction in the driving force (osmotic potentials difference). The DS operates in a continuous feed and bleed mode while the EB is batch processed.

The original DS and EB tanks were heated to ~35°C and mixed to ensure homogeneity. Brine samples were taken initially and every ~5 h during the test. Weights were measured and recorded online. Temperature values and densities were measured manually every hour. The osmotic relaxation was manually performed during 5 min every hour. Injectors were used for circulation. Salt precipitation inside the injectors throughout the test was minor and did not require rinsing.

### Results and Discussion

The gross total flux and water removal during the test are presented in Table 5 below.

**Table 5: Gross total flux and water removal**

| Operation duration (h) | Net duration (h) | Water removal tot (kg) | Gross tot flux (LMH) |
|---|---|---|---|
| 65 | 56 | 180 | 2.1 |

### Example 4

### Osmotic Relaxation Process:

During the osmotic relaxation process the DS recirculation continues at normal. A vacuum is pulled on the draw side of the membrane with the EB recirculation pump by simply closing the inlet valve to the plate. Once 60 kPa of vacuum is achieved, the EB recirculation is stopped and the plate fully isolated by finally closing the outlet valve. The vacuum is held for the desired relaxation time. Then both valves are opened and the EB flow restarted. The majority of crystals are immediately swept away by the DS crossflow. The few remaining crystals that are still loosely adhered to the membrane are encouraged to leave the surface by pulsing a 60 kPa vacuum 5 times with the inlet valve.

### TEST PARAMETERS:

Testing Conditions:
   Duration = 48 hr
   Temp = 34 to 36 ∘C
   Area = 0.188 m2
   Plate Gap = 10 mm
   DS CFV = 0.42 cm/s
   EB CFV = 0.025 cm/s
   Starting DS Vol = 520 L
   Ending DS Vol = 503 L (3.3% concentration)
   Starting EB Vol = 138 L
   Ending EB Vol = 155 L (12.3% dilution)
Osmotic Relaxation Time:
   Time 01-18 hr = 20 min per 2.0 hr
   Time 18-20 hr = 10 min per 2.0 hr
   Time 20-22 hr = 5 min per 2.0 hr
   Time 22-33 hr = 5 min per 1.5 hr
   Time 33-48 hr = 5 min per 1.0 hr

Osmotic relaxation of 5 min/hr was found sufficient to evacuate solids; shorter times are also expected to work well.

While this invention has been described in terms of some specific examples, many modifications and variations are possible. It is therefore understood that within the scope of the appended claims, the invention may be realized otherwise than as specifically described.

## Claims

1. A method for dewatering a solution including processing a draw solution and controlling its flow through at least one forward osmosis (FO) membrane in at least three predetermined different modes of operation including: filtration mode, followed by osmotic relaxation mode followed by pulsation mode,
wherein said membrane is partially or completely submerged in a vessel or in a solar evaporation pond,
wherein said filtration mode comprises filtration by forward osmosis causing water to pass through FO membrane;
wherein said osmotic relaxation mode comprises a period of stop of flow of said draw solution to the membrane and said stop of flow period being determined according to precipitation intensity of scaling precipitants;
and wherein the pulsation mode comprises applying a transmembrane pressure varied by the predetermined number of pulses, applied with a predetermined amplitude within the predetermined range of values, provided in the predetermined frequency during the predetermined time interval, and the number of pulses, the range of values, the frequency and the time interval being functions of the precipitation intensity to cause precipitants to lose adherence to the membrane surface.

2. The method of claim 1, wherein said osmotic relaxation mode includes a period of stop of flow of said draw solution between 1 minute and one hour.

3. The method of claim 1, wherein said at least three predetermined different modes operation comprise 55 minutes of operation in filtration mode; 4 minute operation in osmotic relaxation mode; and 1 minute of operation in pulsation mode.

4. The method of claim 3, wherein said pulsation mode includes applying 2-10 pulses, wherein the amplitude of each pulse is 0.2-0.9 bar.

## Patentansprüche

1. Verfahren zur Entwässerung einer Lösung, das das Aufbereiten einer Ziehlösung und das Steuern deren Flusses durch mindestens eine Direktosmose(FO)-Membran in mindestens drei verschiedenen vorbestimmten Betriebsmodi einschließt, die die folgenden einschließen: Filtrationsmodus, gefolgt von einem osmotischen Entspannungsmodus, gefolgt von einem Pulsationsmodus,
wobei die Membran teilweise oder vollständig in einen Behälter oder in ein solares Verdunstungsbecken getaucht wird,
wobei der Filtrationsmodus eine Filtration durch Direktosmose umfasst, die das Durchlaufen von Wasser durch die FO-Membran bewirkt;
wobei der osmotische Entspannungsmodus einen Zeitraum der Unterbrechung des Flusses der Ziehlösung zur Membran umfasst und der Zeitraum der Flussunterbrechung je nach der Präzipitationsintensität von Scaling-Fällungsmitteln festgelegt wird;
und wobei der Pulsationsmodus das Anlegen eines Transmembrandruckes umfasst, der durch die vorbestimmte Anzahl von Impulsen variiert wird, die mit einer vorbestimmten Amplitude innerhalb des vorbestimmten Wertebereichs angewendet und in der vorbestimmten Frequenz während des vorbestimmten Zeitintervalls bereitgestellt werden, und die Anzahl von Impulsen, der Wertebereich, die Frequenz und das Zeitintervall Funktionen der Präzipitationsintensität sind, um das Ablösen der Fällungsmittel von der Membranoberfläche zu bewirken.

2. Verfahren nach Anspruch 1, wobei der osmotische Entspannungsmodus einen Zeitraum der Unterbrechung des Flusses der Ziehlösung von 1 Minute bis eine Stunde einschließt.

3. Verfahren nach Anspruch 1, wobei die mindestens drei verschiedenen vorbestimmten Betriebsmodi einen 55-minütigen Betrieb im Filtrationsmodus; einen 4-minütigen Betrieb im osmotischen Entspannungsmodus; und einen 1-minütigen Betrieb im Pulsationsmodus umfassen.

4. Verfahren nach Anspruch 3, wobei der Pulsationsmodus das Anwenden von 2-10 Impulsen einschließt, wobei die Amplitude jedes Impulses 0,2-0,9 bar beträgt.

## Revendications

1. Procédé de déshydratation d'une solution comprenant le traitement d'une solution de soutirage et le contrôle de son écoulement à travers au moins une membrane d'osmose directe (FO) dans au moins trois modes de fonctionnement différents prédéfinis comprenant le mode filtration, suivi du mode relaxation osmotique, suivi du mode pulsatile,
dans lequel ladite membrane est partiellement ou complètement immergée dans un réceptacle ou dans un bassin d'évaporation solaire,
dans lequel ledit mode filtration comprend une filtration par osmose directe amenant l'eau à traverser la membrane FO ;
dans lequel ledit mode relaxation osmotique comprend une période d'arrêt de l'écoulement de ladite solution de soutirage vers la membrane et ledit arrêt de la période d'écoulement étant déterminé selon l'intensité de précipitation des précipitants de détartrage ;
et dans lequel le mode pulsatile comprend l'application d'une pression transmembranaire modifiée par le nombre prédéfini d'impulsions, appliquée avec une amplitude prédéfinie dans la plage de valeurs prédéfinie, fournie à la fréquence prédéfinie dans l'intervalle de temps prédéfini, et le nombre d'impulsions, la plage de valeurs, la fréquence et l'intervalle de temps étant des fonctions de l'intensité de la précipitation pour décoller les précipitants de la surface de la membrane.

2. Procédé selon la revendication 1, dans lequel ledit mode relaxation osmotique comprend une période d'arrêt de l'écoulement de ladite solution de soutirage comprise entre 1 minute et une heure.

3. Procédé selon la revendication 1, dans lequel lesdits au moins trois modes de fonctionnement différents prédéfinis comprennent 55 minutes de fonctionnement en mode filtration ; 4 minutes de fonctionnement en mode relaxation osmotique ; et 1 minute de fonctionnement en mode pulsatile.

4. Procédé selon la revendication 3, dans lequel ledit mode pulsatile comprend l'application de 2 à 10 impulsions, l'amplitude de chaque impulsion étant de 0,2 à 0,9 bar.
